# EUROPEAN PATENT APPLICATION

(11) **EP 1 685 956 A1**
(43) Date of publication of application: **02.08.2006**
(21) Application number: 05425042.8
(22) Date of filing: 01.02.2005
(51) Int. Cl.: B32B 27/32, C09J 7/02

(54) **Printable adhesive tape manufactured from an opaque film based on biorientated polypropylene**

(71) Applicant: VIBAC S.p.A., I-15040 Ticineto (Alessandria) (IT)
(72) Inventor: De Carolis, Luca, 66050 San Salvo (Chieti) (IT)
(74) Representative: Gerbino, Angelo

(57) **Abstract**

The adhesive tape comprises an adhesive layer and a backing film based on biorientated polypropylene. This film in turn includes in succession at least a first layer comprising polypropylene or a mixture of polypropylene resins having a melting point between 150 and 170°C and an MFI (melt flow index) of between 1 and 5 g/10 min at a temperature of 230°C. and 2.16 kg, an opaque layer comprising a polyethylene-based resin having a melting point between 120 and 150°C and an MFI (melt flow index) of between 1 and 5 g/10 min at a temperature of 230°C and 2.16 kg, and a layer of acrylic resin-based lacquer.

## Description

This invention relates to a backing film for adhesive tape, the corresponding manufacturing process and an adhesive tape comprising such backing.

According to the known art, a laminated backing film may be manufactured using either polyvinyl chloride (PVC) or biorientated polypropylene (BOPP).

A PVC-based backing film has an opalescent colour because of its intrinsic opacity. It can also be printed because-of the chemical affinity between the PVC and the normal inks used in flexographic printing without its outer surface needing to undergo any particular chemical and/or physical treatments.

In addition to this, the unwinding of an adhesive tape having a PVC-based backing film is silent because of the interactions which exist between the adhesive mass and the PVC.

A BOPP-based backing film on the other hand is of a clear colour because of its intrinsic lucidity. In addition to this its outer surface must undergo particular chemical and/or physical treatments in order that it can be printed using the normal inks used in flexographic printing. Likewise surface treatment has to be applied to a BOPP-based backing film if an adhesive tape comprising it is to be unwound silently.

However, because environmental problems have been detected in connection with the use of PVC, there has recently been a trend to prefer the use of BOPP-based backing film, which is more ecocompatible. In addition to this, because BOPP has a decisively lower density than that of PVC (0.9 against 1.3 g/cm³), this makes it possible to produce approximately 40% more adhesive tape for the same mass of backing film used.

The object of this invention is therefore to provide a BOPP-based backing film which also has the advantageous properties of a PVC-based backing film such as opacity, in addition to printability and intrinsic silence when unwound.

This object is achieved through a biorientated polypropylene-based backing film for adhesive tape comprising in sequence at least one first layer comprising polypropylene or a mixture of polypropylene resins having a melting point between 150 and 170°C and an MFI (melt flow index) of between 1 and 5 g/10 min at a temperature of 230°C and 2.16 kg, an opaque layer comprising a polyethylene-based resin with a melting point between 120 and 150°C and an MFI (melt flow index) of between 1 and 5 g/10 min at a temperature of 230°C and 2.16 kg, and a layer of acrylic-resin based lacquer.

Advantageously the film according to the invention comprises a second layer placed between the first layer and the opaque layer and comprising polypropylene or a mixture of polypropylene resins having a melting point of between 150 and 170°C and an MFI (melt flow index) of between 1 and 5 g/10 min at a temperature of 230°C and 2.16 kg.

Preferably the acrylic resin in the lacquer layer has an acid number of between 40 and 70, so as to have a polarity permitting good flexographic printing with the normal inks used for this purpose.

A further subject of this invention is a process for the manufacture of a backing film for adhesive tape of the type indicated above, comprising the stages of:
- coextruding the aforesaid first layer, second layer, if present, and opaque layer,
- treating the outer surface of the opaque layer so that its surface tension has a value of at least 38 N/m,
- applying a mixture of acrylic resin dissolved in a solvent to the said outer surface of the opaque layer, and
- heating the said mixture so as to cause evaporation of the solvent and the formation of a layer of lacquer.

Advantageously, the outer surface of the opaque layer is flame treated so that its surface tension has a value of at least 38 N/m.

Preferably, the concentration of acrylic resin in the said mixture of resin and solvent - which is for example toluene - is between 5 and 15% by weight.

Yet another subject of this invention is an adhesive tape comprising a backing film of the type indicated above, together with a layer of adhesive adhering to the first layer of the backing film.

This layer of adhesive is advantageously based on natural and/or synthetic rubbers, hydrocarbon resins, various additives (antioxidants, colouring agents, etc.), all dissolved in a solvent such as hexane. Typically, the adhesive tape has an adhesiveness value of between 130 and 170 g/cm.

Further advantages and features of this invention will be apparent from the following examples of film compositions provided in a non-restrictive way in which the values in µm represent the thicknesses of the various layers.

### EXAMPLE 1

| | | |
|---|---|---|
| Adhesive layer: | Adhesiveness = 140 g/cm | |
| First layer: | Polypropylene homopolymer MFI 2 | 1.5 µm |
| Second layer: | Polypropylene homopolymer MFI 3 | 32 µm |
| Opaque layer: | Polyethylene homopolymer MFI 3 | 1.5 µm |
| Lacquered layer: | Acrylic lacquer, acid number 50 in 5% toluene solution | 4 g/m² |

The adhesiveness of the adhesive layer was measured using the following method.

A steel plate of the PSTC (Pressure Sensitive Technical Council) type of length 137.1 mm (5.4 inches) and width 50.8 mm (2 inches) was prepared and the rolls of tape under test were conditioned at 23°C ± 2°C and a relative humidity of 50% ± 5% for 24 hours.

Before each measurement, the plate was cleaned with technical hexane and then with acetone, using sterile gauze.

A strip of the adhesive tape under test 1 cm wide and at least 20 cm long was caused to adhere to the plate, avoiding air inclusions. Perfect adhesion was guaranteed by 10 successive passes with an automatic rubber roller weighing 2 kg at a speed of 300 mm/minute.

The plate was then attached to one of the two clamps of a dynamometer, while an end of the tape was secured to the other clamp. The clamps were then moved apart at a rate of 300 mm/minute with a tape removal angle of 180°.

The mean force applied (measured in g/cm) for detachment of the sample of adhesive from the steel plate is the value of the adhesiveness of the sample under test.

The test was repeated 3 times using different test specimens for each roll under test. The final result of the test was given by the arithmetic mean of the three values found.

### EXAMPLE 2

| | | |
|---|---|---|
| Adhesive layer: Adhesiveness = 140 g/cm (measured using the method previously described) | | |
| First layer: | Polypropylene homopolymer MFI 2 | 1.5 µm |
| Second layer: | Polypropylene homopolymer MFI 3 | 32 µm |
| Opaque layer: | Polypropylene homopolymer MFI 3 | 1.5 µm |
| Laquered layer: | Acrylic lacquer acid number 50 in 15% toluene solution | 4 g/m² |

Of course, without altering the principle of the invention, details of manufacture and embodiments may be varied widely with respect to what has been described purely by way of example without thereby going beyond its scope.

## Claims

1. Biorientated polypropylene-based backing film for adhesive tape, comprising in succession at least a first layer comprising polypropylene or a mixture of polypropylene resins having a melting point between 150 and 170°C and an MFI (melt flow index) of between 1 and 5 g/10 min at a temperature of 230°C and 2.16 kg, an opaque layer comprising a polyethylene-based resin having a melting point between 120 and 150°C and an MFI (melt flow index) of between 1 and 5 g/10 min at a temperature of 230°C and 2.16 kg, and a lacquer layer based on acrylic resin.

2. Film according to claim 1, comprising a second layer placed between the first layer and the opaque layer and comprising polypropylene or a mixture of polypropylene resins having a melting point between 150 and 170°C and an MFI (melt flow index) of between 1 and 5 g/10 min at a temperature of 230°C and 2.16 kg.

3. Film according to any of the preceding claims, in which the acrylic resin in the lacquer layer has an acid number of between 40 and 70.

4. Process for the production of a backing film for adhesive tape according to any of the preceding claims, comprising the stages of:
- coextruding the aforesaid first layer, second layer, if present, and opaque layer,
- treating the outer surface of the opaque layer so that its surface tension has a value of at least 38 N/m,
- applying a mixture of acrylic resin dissolved in a solvent to the said outer surface of the opaque layer, and
- heating the said mixture so as to cause evaporation of the solvent and the formation of a layer of lacquer.

5. Process according to claim 4, in which the outer surface of the opaque layer is flame treated so that its surface tension has a value of at least 38 N/m.

6. Process according to claim 4 or 5, in which the concentration of acrylic resin in the said mixture of resin and solvent is between 5 and 15% by weight.

7. Process according to claim 6, in which the said solvent is toluene.

8. Adhesive tape comprising a backing film according to any of preceding claims 1 to 3, together with a layer of adhesive adhering to the first layer of the backing film.

9. Adhesive tape according to claim 8, having an adhesiveness value of between 130 and 170 g/cm.
